Europäisches Patentamt

European Patent Office

Office européen des brevets

(11) Veröffentlichungsnummer: **0 477 657 A1**

## (12) EUROPÄISCHE PATENTANMELDUNG

(21) Anmeldenummer: **91115329.4**

(22) Anmeldetag: **11.09.91**

(51) Int. Cl.⁵: **B65G 69/00**

(30) Priorität: **25.09.90 DE 4030254**

(43) Veröffentlichungstag der Anmeldung:
**01.04.92 Patentblatt 92/14**

(84) Benannte Vertragsstaaten:
**AT BE CH DE DK ES FR GB IT LI NL SE**

(71) Anmelder: **Alten, Kurt**
**Ringstrasse 14**
**W-3015 Wennigsen(DE)**

(72) Erfinder: **Alten, Kurt**
**Ringstrasse 14**
**W-3015 Wennigsen(DE)**

(74) Vertreter: **Depmeyer, Lothar et al**
**Auf der Höchte 30**
**W-3008 Garbsen 1(DE)**

(54) Verformbare Dichtung des Spaltes zwischen dem Rand einer Gebäudeöffnung und dem Heck eines an diese herangefarenen Fahrzeuges.

(57) Die Erfindung geht aus von Dichtungen dieser Art, bei denen sich von einer vorne gelegenen, verformbaren Schürze zur Anlage an das Fahrzeug aus nach hinten eine Dachplane erstreckt, wobei die seitlich aussen gelegenen Ränder der Dachplane von einer am Gebäude verankerten Konsole (10) getragen sind. Um dabei Montageungenauigkeiten ausgleichen und bestimmte Dachneigungen einstellen zu können, weisen aufgrund der Erfindung die Konsolen (10) einen sich nach unten erstreckenden Arm (11) auf, der mit einer sich am Gebäude abstützenden Justierschraube (12) versehen ist.

Fig. 2

Die Erfindung betrifft eine verformbare Dichtung nach dem Oberbegriff des 1. Anspruchs.

Bei der Montage dieser Dichtungen bestehen sehr oft nicht nur Schwierigkeiten, weil die Montageflächen unregelmässig sind, sondern auch wegen des Wunsches, das Dachgefälle in bestimmter Weise einzurichten z.B. negativ oder positiv einzustellen.

Demgemäss liegt der Erfindung die Aufgabe zugrunde, auch bei unregelmässigen Montageflächen eine ordnungsgemässe Montage durchführen und im übrigen eine gewünschte Dachneigung einstellen zu können.

Zur Lösung dieser Aufgabe weisen erfindungsgemäss die Konsolen im Bereich ihrer zu befestigenden Enden einen sich nach unten erstreckenden Arm auf, der mit einer sich am Gebäude abstützenden Justierschraube versehen ist. Zweckmässigerweise wird dabei dieser Arm so mit der Konsole fest verbunden, dass im montierten Zustand der Konsole lediglich deren hinteres Ende Gebäudekontakt hat, während der erwähnte Arm im Abstand von der Befestigungsfläche angeordnet ist in der Weise, dass nur seine Justierschraube und ggfs. die am Arm angreifenden Verankerungsschrauben mit dem Gebäude in Berührung stehen.

Damit bedarf es nach Einstellung der Justierschrauben und der damit vorgegebenen Neigung der Konsolen lediglich der endgültigen Befestigung der Konsole durch Anziehen der Verankerungsschrauben.

Weitere Einzelheiten der Erfindung werden anhand der Zeichnung erläutert, in der ein Ausführungsbeispiel der Erfindung dargestellt ist.

Es zeigen :

Fig. 1    eine verformbare Dichtung nach dem Gattungsbegriff des Anspruchs 1, und zwar lediglich deren rechte Hälfte in schaubildlicher Darstellung,

Fig. 2    einen Teilschnitt durch die Dichtung gemäss Fig. 1 nach der Linie II - II von Fig. 1.

Zu beiden Seiten einer Gebäudeöffnung 1 eines Gebäudes mit einer Wandung 2 befindet sich ein senkrechter Streifen 3 einer verformbaren Schürze, die sich der Gestalt des andockenden Fahrzeuges anpassen kann und oben im Bereich der Streifenenden ein Querteil 4 aufweist. Diese Schürze ist im Abstand von der Wandung 2 angeordnet; dazu werden die beiden Streifen 3 von in Richtung auf das Gebäude nachgiebigen, am Gebäude verankerten Tragkörpern 5 gehalten.

Das Querteil 4 ist gardinenartig an einem aus Stahl bestehenden Querträger 6 aufgehängt, von dem aus sich nach hinten zur Wandung 2 hin eine Dachplane 7 erstreckt, die an der Wandung 2 durch eine Profilleiste 8 befestigt ist. Zu beiden Seiten der Dichtung ist die Dachplane 7 zur Bildung eines Überhanges 9 verlängert.

Die beiden Enden des Querträgers 6 ruhen auf den freien Enden von Konsolen 1o, die ggfs. auch zur Halterung der Streifen 3 herangezogen werden können. Im Abstand vom gebäudeseitigen Ende der Konsolen 1o sind diese mit einem starren, sich nach unten erstreckenden Arm 11 fest verbunden, der am freien Ende, also unten mit einem Gewindeloch zur Anbringung einer Justierschraube 12 versehen ist. Nahe an der Konsole 1o ist der Arm 11 mit zwei auf gleicher Höhe befindlichen Löchern zum Einsetzen von Befestigungsschrauben 13 für die Konsole 1o versehen, dabei befindet sich die Justierschraube 12 mittig zwischen, jedoch unterhalb der Löcher, während sich die Konsole 1o genau senkrecht oberhalb der Justierschraube 12 befindet.

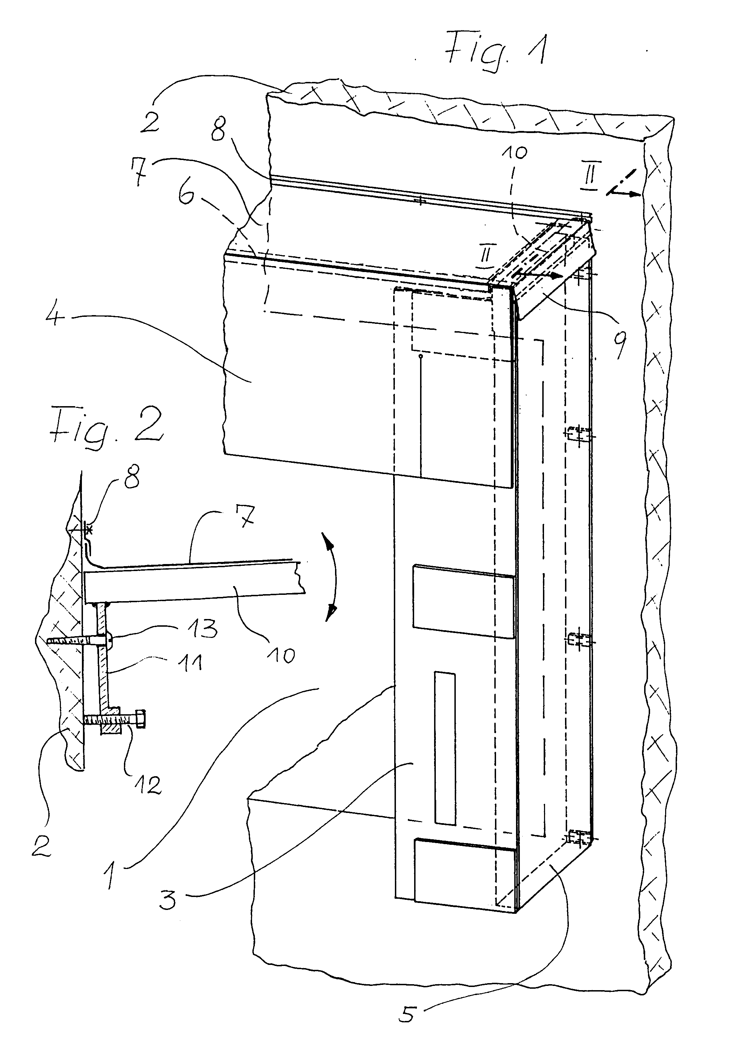

Zur neigungsgerechten Anbringung der Konsolen 1o werden diese mit ihrer Stirnfläche an die Wandung 2 angelegt und dann durch Verstellen der Justierschraube 12 in die gewünschte Neigung gebracht. Alsdann werden die Befestigungsschrauben 13 angezogen. Die fertig montierte Konsole 1o stützt sich dann über ihre Stirnfläche und die Justierschraube 12 an der Wandung 2 kippsicher ab. Gemäss Fig 2 hat die Konsole 1o zusammen mit der Dachplane 7 eine Neigung zur Wandung 2; damit sammelt sich evtl. Regenwasser in der Rinne am Gebäude. Das Wasser kann dann zur Seite hin abfliessen.

**Patentansprüche**

1.    Verformbare Dichtung des Spaltes zwischen dem Rand einer Gebäudeöffnung und dem Heck eines an diese herangefahrenen Fahrzeuges mit einer verformbaren, im Abstand vom Gebäude angeordneten Schürze aus zwei zu beiden Seiten der Gebäudeöffnung angeordneten senkrechten Streifen und einem im Bereich der oberen Streifenenden befindlichen waagerechten Querteil, von dem aus sich nach hinten zum Gebäude hin eine Dachplane erstreckt, wobei im Bereich der seitlich aussen gelegenen Ränder der Dichtung die Dachplane von einer Konsole unterfangen ist, die am Gebäude verankert ist, dadurch gekennzeichnet, dass die Konsolen (1o) im Bereich ihrer zu verankernden Enden einen sich nach unten erstreckenden Arm (11) aufweisen, der im unteren Teil mit einer sich am Gebäude abstützenden Justierschraube (12) versehen ist.

2.    Dichtung nach Anspruch 1, dadurch gekennzeichnet, dass die Konsolen (1o) mit ihrer Stirnseite am Gebäude anliegen und der Arm (11) mit geringem Abstand von der Stirnseite an der Konsole befestigt ist.

3. Dichtung nach Anspruch 1, dadurch gekennzeichnet, dass der Arm (11) zwischen Stirnseite des Konsole (1o) und der Justierschraube (12) mit in die Wandung (2) eingreifenden bzw. mit der Wandung verbundenen Befestigungsschrauben (13) versehen ist.

4. Dichtung nach Anspruch 1 und 3, dadurch gekennzeichnet, dass sich die Konsolen (1o) im montierten Zustand auf ihrer Stirnseite und der Justierschraube (12) auf dem Gebäude abstützen und ihre Halterung sowie Pressung gegen das Gebäude durch die Befestigungsschrauben (13) erfolgen.

5. Dichtung nach Anspruch 1, dadurch gekennzeichnet, dass das Querteil (4) an einem Querträger (6) aufgehängt ist, von dem aus die Dachplane (7) zum Gebäude führt, wobei die Enden des Querträgers auf dem freien Ende der Konsolen (1o) aufliegen und durch eine Betätigung der Justierschrauben (12) der beiden Konsolen (1o) eine Neigungsverstellung der Dachplane über deren gesamte Erstreckung quer zur Dichtung erfolgt.

6. Dichtung nach Anspruch 5, dadurch gekennzeichnet, dass die beiden Konsolen (1o) mit Gefälle zum Gebäude hin einstellbar sind.

7. Dichtung nach Anspruch 5, dadurch gekennzeichnet, dass die Dachplane (7) mit Gefälle zum Gebäude hin einstellbar ist.

8. Dichtung nach Anspruch 1 und 4, dadurch gekennzeichnet, dass die Befestigungsschrauben (13) im wesentlichen auf einer Höhe nebeneinander und die Stirnseite der Konsole (1o) sowie die Justierschraube (12) praktisch auf einer gedachten Senkrechten angeordnet sind, die sich im wesentlichen mittig zwischen den beiden Befestigungsschrauben befindet.

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-3 772 839 (TIMBERS)<br>* Spalte 4, Zeile 55 - Zeile 61 * * * Abbildung 1, ref. 34 * *<br>– – – – – | 1 | B 65 G 69/00 |

**RECHERCHIERTE SACHGEBIETE (Int. Cl.5)**

B 65 G

**Der vorliegende Recherchenbericht wurde für alle Patentansprüche erstellt**

| Recherchenort | Abschlußdatum der Recherche | Prüfer |
|---|---|---|
| Den Haag | 10 Dezember 91 | BEERNAERT J.E. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
-------------------------------------------------------------
& : Mitglied der gleichen Patentfamilie, übereinstimmendes Dokument